# EUROPÄISCHE PATENTSCHRIFT

(11) **EP 2 593 897 B1**
(45) Veröffentlichungstag und Bekanntmachung des Hinweises auf die Patenterteilung: **28.02.2018**
(21) Anmeldenummer: 11740616.5
(22) Anmeldetag: 22.07.2011
(51) Int. Cl.: G06F 21/33, H04L 9/32, H04W 12/06, H04L 29/06

(54) **VERFAHREN ZUR ZERTIFIKATS-BASIERTEN AUTHENTISIERUNG**
METHOD FOR CERTIFICATE-BASED AUTHENTICATION
PROCÉDÉ D'AUTHENTIFICATION SUR LA BASE DE CERTIFICATS

(30) Priorität: 07.09.2010 DE 102010044518
(43) Veröffentlichungstag der Anmeldung: 22.05.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2011/062642
(87) Internationale Veröffentlichungsnummer: WO 2012/031820

(56) Entgegenhaltungen:
- EP-A1- 1 653 387
- EP-A2- 0 456 386
- EP-A2- 1 475 937
- WO-A1-00/10303

## Beschreibung

Die Erfindung betrifft ein Verfahren zur Zertifikats-basierten Authentisierung, bei der sich ein erster Teilnehmer gegenüber einem zweiten Teilnehmer mit Hilfe eines, dem ersten Teilnehmer zugeordneten digitalen Zertifikats authentisiert.

Digitale Zertifikate sind an sich aus dem Stand der Technik bekannt. Sie enthalten die Identität einer Entität in der Form einer Person bzw. Institution bzw. Maschine, für die das Zertifikat ausgestellt ist. Hier und im Folgenden wird der Begriff des Teilnehmers verwendet, dem ein Zertifikat zugeordnet sein kann. Ein Teilnehmer kann dabei ein Computer bzw. eine Maschine sein, für die das Zertifikat ausgestellt ist. Ebenso kann sich ein Teilnehmer auf einen Computer bzw. eine Maschine beziehen, welche das Zertifikat einer Person bzw. Institution verwaltet. Durch die Zuständigkeit für die Zertifikatsverwaltung wird dem Computer bzw. der Maschine das Zertifikat zugeordnet.

Ein Zertifikat enthält einen öffentlichen Schlüssel für die entsprechende Entität, und über eine digitale Signatur im Zertifikat kann der Eigentümer des Zertifikats bestätigt werden. Die digitale Signatur wird dabei von einer Zertifikatsausgabestelle berechnet. Über ein Root-Zertifikat dieser Ausgabestelle bzw. eine Zertifikatskette hin zu dem Root-Zertifikat kann die Signatur als gültig verifiziert werden. In einem digitalen Zertifikat können Zusatzinformationen in der Form sog. Attribute eincodiert werden, durch welche Berechtigungen für den Nutzer des Zertifikats oder Nutzungseinschränkungen des Zertifikats festgelegt werden. Beispielsweise ist es bekannt, mit Hilfe eines Attributs das Zertifikat bzw. die über das Zertifikat bestätigten kryptographischen Schlüssel nur für bestimmten Kommunikationsarten bzw. Kommunikationsprotokolle zu beschränken. Ebenso ist es bekannt, die geographische Gültigkeit eines Zertifikats einzuschränken, so dass das Zertifikat im Rahmen einer Authentisierung nur von Teilnehmern in einem vorbestimmten geographischen Bereich verwendet werden kann.

Im Stand der Technik wird ferner beschrieben, WLAN-Netzwerknamen als Zertifikatserweiterungen in ein Zertifikat einzucodieren, um hierüber ein geeignetes Zertifikat aus mehreren, beim sich authentisierenden Teilnehmer vorhandenen Zertifikaten auszuwählen.

Darüber hinaus ist die Eincodierung von Berechtigungsinformationen in Zertifikaten beschrieben. Gemäß diesen Berechtigungsinformationen wird festgelegt, welche Zugriffe der mit dem Zertifikat authentisierte Teilnehmer ausführen darf. Weiterhin ist es bekannt, Rolleninformationen in Zertifikate einzucodieren, um die Administration von autorisierten Zugriffen auf eine Vielzahl von Teilnehmern zu vereinfachen. Dabei wird einem Teilnehmer in Abhängigkeit von der im Zertifikat hinterlegten Rolle ein Zugriff auf einen anderen Teilnehmer erlaubt oder verweigert.

Die aus dem Stand der Technik bekannten Zertifikatserweiterungen ermöglichen zwar eine Beschränkung der Nutzung des Zertifikats, erlauben aber nicht die Festlegung von dedizierten Kommunikationsverbindungen zwischen zwei Kommunikationspartnern, für welche das Zertifikat ausschließlich nutzbar sein soll.

Die Druckschrift WO 00/10303 A1 offenbart die Zertifikats-basierte Authentisierung eines Teilnehmers zum Zugriff auf eine geschützte Ressource unter Verwendung eines Sicherheitsservers. Neben Attributen aus dem Zertifikat des Teilnehmers können eine Eingangs-Adresse und eine Ausgangs-Adresse einer im Sicherheitsserver hinterlegten Proxy-Definition bei der Authentisierung berücksichtigt werden.

Aufgabe der Erfindung ist es, ein Verfahren zur Zertifikats-basierten Authentisierung zu schaffen, bei dem die Nutzung des Zertifikats feingranular für vorbestimmte Kommunikationsaufgaben festgelegt werden kann.

Diese Aufgabe wird durch das Verfahren gemäß Patentanspruch 1 bzw. das Kommunikationsnetz gemäß Patentanspruch 15 gelöst. Weiterbildungen der Erfindung sind in den abhängigen Ansprüchen definiert.

Im Rahmen des erfindungsgemäßen Verfahrens wird eine Authentisierung durchgeführt, bei der sich ein erster Teilnehmer gegenüber einem zweiten Teilnehmer mit Hilfe eines, dem ersten Teilnehmer zugeordneten digitalen Zertifikats authentisiert. Das Zertifikat spezifiziert dabei ein oder mehrere Merkmale, die von dem zweiten Teilnehmer zu erfüllen sind. Der Begriff der Spezifikation von einem oder mehreren Merkmalen im Zertifikat ist dabei weit zu verstehen. Die spezifizierten Merkmale können direkt im Zertifikat hinterlegt sein. Ebenso besteht die Möglichkeit, dass das Zertifikat einen Verweis auf entsprechende Merkmale enthält, welche an anderer Stelle gespeichert sind. Hierdurch wird eine mittelbare Spezifikation der Merkmale in dem Zertifikat erreicht.

Im Rahmen der erfindungsgemäßen Authentisierung wird anhand des Zertifikats überprüft, ob der zweite Teilnehmer das oder die Merkmale erfüllt, wobei ein für eine erfolgreiche Authentisierung erforderliches Kriterium darin besteht, dass der zweite Teilnehmer das oder die Merkmale erfüllt. Das erfindungsgemäße Verfahren zeichnet sich dadurch aus, dass bei der Authentisierung Eigenschaften des zweiten Teilnehmers berücksichtigt werden, der bei der Authentisierung den Authentikator darstellt, gegenüber dem sich der erste Teilnehmer (d.h. der Authentisierer) authentisiert. Auf diese Weise kann die Nutzung des Zertifikats dediziert auf bestimmte Kommunikationsverbindungen zwischen einem ersten und einem zweiten Teilnehmer eingeschränkt werden.

Wie bereits oben erwähnt, können die durch das Zertifikat spezifizierten Merkmale unmittelbar oder mittelbar (z.B. über einen Verweis) im Zertifikat codiert sein. In einer bevorzugten Ausführungsform werden die Merkmale ähnlich wie im Stand der Technik durch ein oder mehrere Attribute spezifiziert, welche die entsprechenden Merkmale direkt enthalten, und/oder einen oder mehrere Verweise auf Attribute, über welche die Merkmale mittelbar spezifiziert werden. Im Unterschied zu bekannten Attributen enthalten diese Attribute nunmehr Merkmale bzw. Eigenschaften des zweiten Teilnehmers. Gegebenenfalls können in dem Zertifikat auch weitere, an sich bekannte Attribute spezifiziert sein, welche zusätzlich neben den zu erfüllenden Merkmalen des zweiten Teilnehmers weitere Einschränkungen festlegen, welche bei der Authentisierung zu berücksichtigen sind.

In einer bevorzugten Ausführungsform des erfindungsgemäßen Verfahrens erfolgt die Überprüfung, ob der zweite Teilnehmer das oder die Merkmale erfüllt, durch den zweiten Teilnehmer selbst. Vorzugsweise übermittelt dabei der erste Teilnehmer sein Zertifikat an den zweiten Teilnehmer oder der zweite Teilnehmer ruft das Zertifikat bei einer dritten Stelle ab, beispielsweise bei einer entsprechenden Zertifikats-Ausgabestelle oder einem Verzeichnisdienst. Auf diese Weise erhält der zweite Teilnehmer Zugriff auf die von ihm zu erfüllenden Merkmale, so dass er überprüfen kann, ob er diese Merkmale erfüllt. Sollte er diese Merkmale nicht erfüllen, wird die Authentisierung des ersten Teilnehmers abgebrochen bzw. abgewiesen.

In einer weiteren Ausführungsform des erfindungsgemäßen Verfahrens wird die Überprüfung, ob der zweite Teilnehmer das oder die Merkmale erfüllt, durch den ersten Teilnehmer durchgeführt. In diesem Fall brauchen die entsprechend zu erfüllenden Merkmale dem zweiten Teilnehmer nicht übermittelt bzw. bereitgestellt werden. Dabei können entsprechende Eigenschaften des zweiten Teilnehmers, anhand derer überprüft werden kann, ob die im Zertifikat spezifizierten Merkmale erfüllt sind, bereits vorab im ersten Teilnehmer hinterlegt sein. Ebenso besteht die Möglichkeit, dass der erste Teilnehmer eine Information betreffend Eigenschaften des zweiten Teilnehmers von dem zweiten Teilnehmer empfängt oder bei einer dritten Stelle (z.B. einer Zertifikats-Ausgabestelle oder einem Verzeichnisdienst) abruft, so dass der erste Teilnehmer anschließend anhand der Information bestimmen kann, ob der zweite Teilnehmer das oder die im Zertifikat spezifizierten Merkmale erfüllt. Sind die Merkmale nicht erfüllt, kann die Authentisierung wieder in geeigneter Weise abgebrochen werden, z.B. kann der erste Teilnehmer auf die Übermittlung des Zertifikats an den zweiten Teilnehmer verzichten bzw. zu einem späteren Zeitpunkt die Authentisierung beenden.

Die Merkmale, die von dem zweiten Teilnehmer zu erfüllen sind, können beliebige Eigenschaften des zweiten Teilnehmers betreffen. Vorzugsweise umfassen die Merkmale eines oder mehrere der folgenden Merkmale:
- eine Identität oder einen Identitätsbereich für den zweiten Teilnehmer;
- einen Gerätetyp des zweiten Teilnehmers;
- einen von dem zweiten Teilnehmer bereitgestellten Dienst;
- ein von dem zweiten Teilnehmer bereitgestelltes Verfahren.

Der obige Begriff des Gerätetyps ist dabei weit zu verstehen und kann sich auf ein oder mehrere vorbestimmte Geräte beziehen, über welche die Funktionalität des zweiten Teilnehmers realisiert wird, gegebenenfalls auch auf die Geräte eines bestimmten Geräteherstellers. Die obige Identität bzw. der obige Identitätsbereich kann dabei z.B. eine Adresse, insbesondere eine IP-Adresse oder MAC-Adresse, oder einen entsprechenden Adressbereich, insbesondere einen IP-Adressbereich oder MAC-Adressbereich, umfassen. Ebenso kann sich die Identität bzw. der Identitätsbereich auf einen Namen, z.B. einen DNS-Namen, bzw. einen Namensbereich, insbesondere einen DNS-Namensbereich, beziehen. Die Identität bzw. der Identitätsbereich kann gegebenenfalls auch eine Portnummer oder einen Portnummern-Bereich, z.B. basierend auf dem TCP- und/oder UDP-Protokoll, oder einen URL-Bezeichner bzw. URL-Bezeichnerbereich darstellen. Zur Spezifikation eines Identitätsbereichs können insbesondere geeignete, aus dem Stand der Technik bekannte Wildcards oder Netzwerkmasken verwendet werden.

Bei dem oben genannten Dienst, der ein von dem zweiten Teilnehmer zu erfüllendes Merkmal darstellen kann, handelt es sich z.B. um einen Web-Service. Analog kann das oben erwähnte Verfahren, welches von dem zweiten Teilnehmer bereitzustellen ist, eine Methode eines Web-Services darstellen.

In einer weiteren, besonders bevorzugten Ausführungsform des erfindungsgemäßen Verfahrens findet ihm Rahmen der Authentisierung des ersten Teilnehmers gegenüber dem zweiten Teilnehmer neben der obigen Überprüfung, ob der zweite Teilnehmer das oder die im Zertifikat spezifizierten Merkmale erfüllt, auch eine Verifikation des Zertifikats statt. Diese Verifikation kann in an sich bekannter Weise durch Überprüfung der Signatur des Zertifikats erfolgen.

In einer weiteren Ausführungsform des erfindungsgemäßen Verfahrens wird mit einem im Zertifikat enthaltenen öffentlichen Schlüssel des ersten Teilnehmers sowie dem diesem öffentlichen Schlüssel zugeordneten privaten Schlüssel eine kryptographisch gesicherte Verbindung zwischen dem ersten und zweiten Teilnehmer aufgebaut, z.B. basierend auf dem SSL/TLS-Protokoll und/oder dem IKE/IPsec-Protokoll und/oder dem IKEv2/IPsec-Protokoll. Im Rahmen dieses Verbindungsaufbaus kann dann die Überprüfung des oder der von dem ersten Teilnehmer zu erfüllenden Merkmale erfolgen. Gegebenenfalls besteht auch die Möglichkeit, dass die Überprüfung dieser Merkmale außerhalb dieses Verbindungsaufbaus in einem separaten Authentisierungsschritt durchgeführt wird, z.B. nach dem Aufbau der kryptographisch gesicherten Verbindung.

In einer weiteren, besonders bevorzugten Ausführungsform des erfindungsgemäßen Verfahrens ist das Zertifikat ein erweitertes X.509-Zertifikat, wobei das X.509-Zertifikat an sich aus dem Stand der Technik bekannt ist. Dieses erweiterte Zertifikat spezifiziert zusätzlich das oder die von dem zweiten Teilnehmer zu erfüllenden Merkmale.

Das erfindungsgemäße Verfahren kann gegebenenfalls auch zur gegenseitigen Authentisierung zwischen dem ersten und zweiten Teilnehmer genutzt werden. Das heißt, mit dem Verfahren authentisiert sich der erste Teilnehmer beim zweiten Teilnehmer und unter Vertauschung der Rollen von erstem und zweitem Teilnehmer analog der zweite Teilnehmer beim ersten Teilnehmer.

Das erfindungsgemäße Verfahren kann für beliebige erste bzw. zweite Teilnehmer in der Form von Rechnern bzw. Maschinen eingesetzt werden. Vorzugsweise stellen die Teilnehmer dabei Komponenten einer Automatisierungsanlage dar, wie z.B. entsprechende Steuerungsgeräte, Feldgeräte, Sensoren, Aktoren und dergleichen.

Neben dem oben beschriebenen Verfahren betrifft die Erfindung ferner ein Kommunikationsnetz mit einem ersten und einem zweiten Teilnehmer, wobei im Betrieb des Kommunikationsnetzes eine Zertifikats-basierte Authentisierung gemäß dem oben beschriebenen Verfahren bzw. einer oder mehrerer Varianten des oben beschriebenen Verfahrens durchführbar ist.

Ausführungsbeispiele der Erfindung werden nachfolgend anhand der beigefügten Figuren detailliert beschrieben.

Es zeigen:
- Fig. 1: ein Ablaufdiagramm einer Authentisierung gemäß einer ersten Ausführungsform des erfindungsgemäßen Verfahrens;
- Fig. 2: ein Ablaufdiagramm einer Authentisierung gemäß einer zweiten Ausführungsform des erfindungsgemäßen Verfahrens; und
- Fig. 3: ein Ablaufdiagramm einer beidseitigen Authentisierung gemäß einer dritten Ausführungsform des erfindungsgemäßen Verfahrens.

Im Folgenden wird die erfindungsgemäße Authentisierung basierend auf einem erweiterten X.509-Zertifikat erläutert, das z.B. bei einer IKE/IPsec- bzw. einer SSL/TLS-Authentisierung verwendet wird. Ein herkömmliches X.509-Zertifikat enthält in an sich bekannter Weise neben anderen Informationen einen öffentlichen Schlüssel eines ersten Teilnehmers, der sich gegenüber einem zweiten Teilnehmer authentisieren möchte. Im Rahmen der Authentisierung wird dieser Schlüssel zum verschlüsselten Austausch eines Geheimnisses und zur Generierung eines Sitzungsschlüssels für eine kryptographisch gesicherte Kommunikation zwischen dem ersten Teilnehmer und dem zweiten Teilnehmer verwendet. Das Zertifikat ist dabei durch eine vertrauenswürdige Zertifizierungsstelle signiert. Zur Verifikation des Zertifikats wird dieses an den zweiten Teilnehmer übermittelt, der anschließend die Signatur in an sich bekannter Weise basierend auf einem Root-Zertifikat der das Zertifikat herausgebenden Zertifizierungsstelle bzw. eine Zertifikatskette hin zum Root-Zertifikat verifiziert. In der nachfolgenden Tabelle 1 sind die wesentlichen Informationen eines herkömmlichen X.509-Zertifikats wiedergegeben.

**Tabelle 1:**

| Certificate |
|---|
| certificateID: SerialNumber |
| issuedTo: Name |
| issuer: Name |
| validFrom: Time |
| validTo: Time |
| Public Key |
| Attributes |
| AttributeA |
| AttributeB |
| |
| Signature |

In obiger Tabelle bezeichnet der Ausdruck "certificateID" eine Identität des Zertifikats, welche durch die Seriennummer "SerialNumber" spezifiziert wird. Durch den englischen Ausdruck "issuedTo" wird angegeben, für welchen Teilnehmer das Zertifikat ausgestellt ist, wobei der Ausdruck "issuedTo" von dem Namen des Teilnehmers gefolgt ist. Durch den Ausdruck "issuer" wird der Herausgeber des Zertifikats bezeichnet, der durch einen geeigneten Namen des Herausgebers spezifiziert wird. Durch die Ausdrücke "validFrom" und "validTo" wird der Gültigkeitszeitraum des Zertifikats spezifiziert, wobei der Ausdruck "validFrom" einen Zeitpunkt "Time" spezifiziert, an der die Gültigkeit des Zertifikats anfängt bzw. angefangen hat, und der Ausdruck "validTo" wiederum einen Zeitpunkt "Time" spezifiziert, der das Ablaufdatum des Zertifikats festlegt. Anschließend ist in dem Zertifikat der öffentliche Schlüssel "Public Key" des Teilnehmers enthalten.

Zusätzlich können in dem Zertifikat mehrere Attribute vorhanden sein, welche im Abschnitt "Attributes" des Zertifikats definiert sind. Beispielhaft ist dabei ein Attribut AttributeA und ein Attribut AttributeB angegeben. Solche Attribute können beispielsweise Berechtigungen spezifizieren, durch welche festgelegt wird, welche Aktionen der Teilnehmer, dem das Zertifikat gehört, durchführen kann. Insbesondere ist es dabei bekannt, in einem Attribut einen DNS-Namen oder eine IP-Adresse einzucodieren. Hierüber kann die Email-Adresse bzw. Server-Adresse eines SSL/TLS-Servers angegeben werden, für den das Zertifikat als gültig betrachtet werden soll. Diese Information bezieht sich auf das Subjekt, d.h. auf denjenigen, der sich durch das Zertifikat authentisiert. Das Zertifikat enthält ferner die bereits oben beschriebene Signatur, welche mit "Signature" bezeichnet ist und die Verifikation des Zertifikats basierend auf einem Root-Zertifikat bzw. einer Zertifikatkette hin zum Root-Zertifikat ermöglicht.

Im Rahmen der weiter unten noch näher beschriebenen Authentisierung eines ersten Teilnehmers gegenüber einem zweiten Teilnehmer wird in der hier beschriebenen Ausführungsform ein erweitertes X.509-Zertifikat eingesetzt, dessen Aufbau in nachfolgender Tabelle 2 wiedergegeben ist.

**Tabelle 2:**

| Certificate |
|---|
| certificateID: SerialNumber |
| issuedTo: Name |
| issuer: Name |
| validFrom: Time |
| validTo: Time |
| Public Key |
| Attributes |
| AttributeA |
| AttributeB |
| **authorizedVerifier: verifier** |
| |
| Signature |

Der Aufbau des Zertifikats der Tabelle 2 entspricht weitestgehend dem Zertifikat der Tabelle 1, so dass die gleichen Bestandteile nicht nochmals erläutert werden. Im Unterschied zum Zertifikat der Tabelle 1 enthält das erweiterte X.509-Zertifikat nunmehr ein weiteres Attribut, welches als "authorizedVerifier" bezeichnet ist. Gemäß diesem Attribut werden die als "Verifier" bezeichnete Merkmale spezifiziert, welche sich im Unterschied zum Stand der Technik nicht auf den sich authentisierenden ersten Teilnehmer, sondern auf den als Authentikator fungierenden zweiten Teilnehmer beziehen, der das Zertifikat prüft bzw. verifiziert. Es sind dabei verschiedene Ausgestaltungen von durch das Attribut "authorizedVerifier" spezifizierbaren Merkmalen möglich. Insbesondere können sich die Merkmale auf Adressen bzw. Adressbereiche bzw. Namen bzw. Portnummern bzw. Web-Services bzw. Methoden von Web-Services beziehen. Im Folgenden sind Beispiele für solche Merkmale gegeben, wobei in Klammern hinter den Merkmalen deren Typ angegeben ist:
- 18.5.13.8 (IP-Adresse), 18.5.13.1-18.5.13.10 (IP-Adressbereich), 18.5.0.0/16 (IP-Adressbereich);
- vpn.siemens.com (DNS-Name), *.siemens.com (DNS-Namensbereich);
- m2m.siemens.com:4137 (DNS-Name und Portnummer);
- https://m2m.siemens.com/registerRemoteService.wsdl (ein Web-Service);
- https://m2m.siemens.com/remoteService/setSensingRange (eine Methode eines Web-Service).

Im Rahmen der Zertifikatsprüfung werden dabei die Merkmale des Attributs "authorizedVerifier" überprüft und nur dann, wenn der zweite Teilnehmer diese Merkmale erfüllt, ist die Authentisierung erfolgreich. Die Merkmale müssen dabei nicht genau einen bestimmten zweiten Teilnehmer festlegen, sondern sie können auch eine Gruppe von zweiten Teilnehmern bezeichnen, wie oben durch entsprechende Adressbereiche bzw. Namensbereiche angedeutet ist. Insbesondere besteht auch die Möglichkeit, sog. Wildcards zu verwenden, welche Platzhalter für beliebige Symbolfolgen sind. Solche Wildcards können in an sich bekannter Weise über das Stern-Symbol "*" festgelegt sein. Mit diesen Wildcards kann z.B. die Authentisierung gegenüber zweiten Teilnehmern in der Form von Maschinen eines Subnetzes mit einem einzigen Zertifikat ermöglicht werden. Eine mögliche Angabe ist dabei "139.23.10.*" oder "139.23.10.0/24" als IP-Adressband bzw. "*.siemens.de" als Server-Cluster. Durch "139.23.10.0/24" wird dabei angegeben, dass bei dem Vergleich nur die oberen 24 Bit der IP-Adresse, d.h. "139.23.10", übereinstimmen müssen.

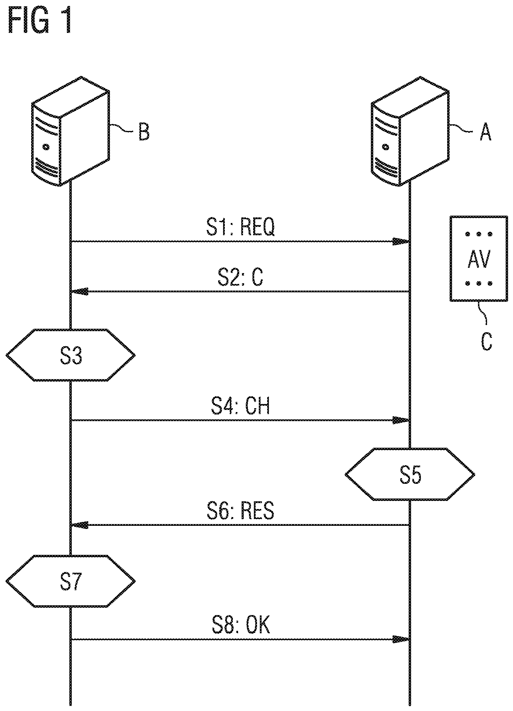

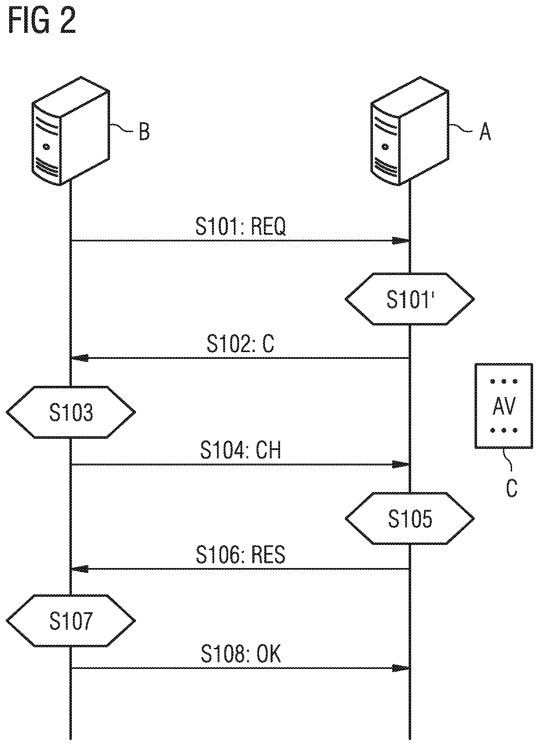

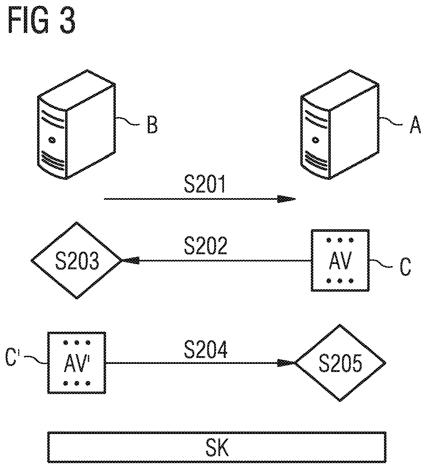

Nachfolgend wird anhand von Fig. 1 eine erste Ausführungsform einer erfindungsgemäßen Authentisierung beschrieben, wobei in diesem Beispiel die Überprüfung, ob der zweite Teilnehmer die entsprechenden Merkmale gemäß dem Attribut "authorizedVerifier" erfüllt, durch den ersten Teilnehmer durchgeführt wird. In Fig. 1 und auch in den nachfolgenden Figuren 2 und 3 wird dabei der als Authentisierer fungierende erste Teilnehmer mit Bezugszeichen A bezeichnet und der als Authentikator fungierende zweite Teilnehmer mit Bezugszeichen B, wobei diese Teilnehmer als entsprechende Rechner dargestellt sind, jedoch auch beliebige andere Arten von Maschinen bzw. Geräten, z.B. Komponenten einer Automatisierungsanlage, darstellen können.

In der Ausführungsform der Fig. 1 fordert in einem Schritt S1 der Authentikator B das Zertifikat mittels einer Anfrage REQ beim Authentisierer A an. Dieser übermittelt in Schritt S2 das Zertifikat an den Authentikator B, wobei das Zertifikat mit Bezugszeichen C bezeichnet ist und das darin enthaltene Attribut "authorizedVerifier", mit dem die Merkmale des Authentikators spezifiziert werden, mit Bezugszeichen AV. Das in Schritt S2 übermittelte Zertifikat wird vom Authentikator in Schritt S3 geprüft. Dabei wird neben den im Stand der Technik bekannten Prüfungen, welche insbesondere die Prüfung der Signatur des Zertifikats umfassen, zusätzlich ermittelt, ob der Authentikator die Merkmale erfüllt, die im Zertifikat C unter dem Attribut AV codiert sind. Wird dabei festgestellt, dass der Authentikator die Merkmale nicht erfüllt, wird die Authentisierung abgebrochen bzw. abgewiesen. Ist die Zertifikatsprüfung gemäß Schritt S3 erfolgreich, setzt sich die Authentisierung im Rahmen eines an sich bekannten Challenge-Response-Verfahrens fort, bei dem in Schritt S4 eine Challenge CH von dem Authentikator B zum Authentisierer A übertragen wird, wobei die Challenge z.B. eine vom Authentikator generierte Zufallszahl darstellt. Anschließend wird in Schritt S5 eine kryptographische Operation auf die Challenge mit dem privaten Schlüssel des Authentisierers angewandt, wobei der entsprechend zur Entschlüsselung zu nutzende öffentliche Schlüssel im Zertifikat C enthalten ist. In Schritt S6 wird die Antwort RES, welche sich durch die kryptographische Operation ergibt, an den Authentikator B übermittelt, der diese Antwort basierend auf dem öffentlichen Schlüssel des Zertifikats in Schritt S7 verifiziert. Ist die Verifikation erfolgreich, d.h. kann mit dem öffentlichen Schlüssel die ursprüngliche Challenge CH rekonstruiert werden, ist der Authentisierungsprozess erfolgreich beendet, was in Schritt S8 durch ein entsprechendes OK bestätigt wird, das vom Authentikator zum Authentisierer übermittelt wird.

In der anhand von Fig. 1 beschriebenen Ausführungsform fragt der Authentikator B das Zertifikat C beim Authentisierer A separat ab. In einer alternativen Ausgestaltung ist es auch möglich, dass der Authentisierer A das Zertifikat C zusammen mit der Antwort RES überträgt. Ebenso besteht die Möglichkeit, dass der Authentikator das Zertifikat bei einem Verzeichnisdienst abruft oder bereits vorab bei sich lokal gespeichert hat.

Fig. 2 zeigt eine Abwandlung der in Fig. 1 gezeigten Authentisierung. Dabei wird analog zu Fig. 1 das Zertifikat des Authentisierers A mit Bezugszeichen C sowie das darin enthaltene Attribut "authorizedVerifier" mit Bezugszeichen AV bezeichnet. Genauso wie in der Ausführungsform der Fig. 1 wird in einem Schritt S101 das Zertifikat über eine Anfrage REQ des Authentikators B beim Authentisierer A angefordert. Im Unterschied zu dem Verfahren der Fig. 1 erfolgt nunmehr in Schritt S101' auf Seiten des Authentisierers A die Überprüfung, ob der das Zertifikat anfragende Authentikator B die Merkmale gemäß dem Attribut AV erfüllt. Dabei sind dem Authentisierer die tatsächlichen Merkmale des Authentikators bekannt. Diese Merkmale können durch die obige Anfrage REQ oder gegebenenfalls durch eine separate Nachricht vom Authentikator zum Authentisierer übermittelt werden. Ebenso besteht die Möglichkeit, dass der Authentisierer die tatsächlichen Merkmale des Authentikators bei einer dritten Stelle abruft, bei der diese Merkmale hinterlegt sind. Wird festgestellt, dass die Merkmale gemäß dem Attribut AV nicht vom Authentikator B erfüllt sind, wird die Authentisierung in geeigneter Weise abgebrochen bzw. abgewiesen, z.B. indem nachfolgend das Zertifikat C nicht dem Authentikator bereitgestellt wird bzw. die weiter unten beschriebene Antwort RES nicht berechnet und übertragen wird.

Wird demgegenüber in Schritt S101' festgestellt, dass der Authentikator B die Merkmale gemäß dem Attribut AV des Zertifikats C erfüllt, erfolgt in Schritt S102 die Übermittlung des Zertifikats C an den Authentikator B. Anschließend verifiziert der Authentikator in Schritt S103 das Zertifikat in an sich bekannter Weise, wobei er insbesondere die Gültigkeit des Zertifikats und die Signatur des Zertifikats prüft. Dabei braucht er im Unterschied zu Fig. 1 nicht mehr das Attribut AV überprüfen, da dies bereits auf Seiten des Authentisierers in Schritt S101' erfolgt ist. Ist die Verifikation des Zertifikats erfolgreich, wird analog zu Fig. 1 ein Challenge-Response-Verfahren durchgeführt, bei dem in Schritt S104 eine Challenge CH an den Authentisierer A übermittelt wird, der anschließend in Schritt S105 eine kryptographische Operation auf die Challenge CH mit seinem privaten Schlüssel ausführt. Die sich aus der kryptographischen Operation ergebende Antwort RES wird in Schritt S106 an den Authentikator B übertragen, der in Schritt S107 die Antwort basierend auf dem öffentlichen Schlüssel des Zertifikats C verifiziert und bei erfolgreicher Verifikation in Schritt S108 ein OK an den Authentisierer übermittelt, wodurch die erfolgreiche Authentisierung mitgeteilt wird.

In den Ausführungsformen der Fig. 1 und Fig. 2 ist die Authentisierung als eigenständiges Verfahren wiedergegeben. Es besteht jedoch gegebenenfalls auch die Möglichkeit, dass die Authentisierung im Rahmen eines authentisierten Verbindungsaufbaus basierend auf bekannten Protokollen, wie SSL, TLS, IKE, EAP-TLS und dergleichen, erfolgt. In einer weiteren Variante der Erfindung kann auch eine beidseitige Authentisierung sowohl des Teilnehmers A gegenüber dem Teilnehmer B als auch des Teilnehmers B gegenüber dem Teilnehmer A erfolgen. In Fig. 3 ist eine solche Ausführungsform einer beidseitigen Authentisierung zwischen den Teilnehmern B und A wiedergegeben.

In Fig. 3 erfolgt der Informationsaustausch über das an sich bekannte SSL/TLS-Protokoll. Die nachfolgend genannten Schritte S201 bis S205 umfassen dabei in der Regel jeweils eine Vielzahl von Teilschritten, welche an sich aus dem SSL/TLS-Protokoll bekannt sind und deshalb nicht näher ausgeführt werden. In Schritt S201 fordert der Teilnehmer B von dem Teilnehmer A dessen Zertifikat C mit den darin enthaltenen Merkmalen bzw. Attributen AV an. In Schritt S202 wird dieses Zertifikat übermittelt, wobei in Schritt S203 die Überprüfung des Zertifikats erfolgt. Im Rahmen dieses Schrittes überprüft der Teilnehmer B, ob er die im Zertifikat C enthaltenen Merkmale AV erfüllt. In Schritt S204 übermittelt der Teilnehmer B sein Zertifikat C' mit darin enthaltenen Merkmalen bzw. Attributen AV' an den Teilnehmer A. Nach Empfang des Zertifikats überprüft der Teilnehmer A in Schritt S205, ob er die Merkmale AV' erfüllt. Sind die Überprüfungen in Schritt S203 und S205 beide positiv, werden beide Zertifikate von den entsprechenden Teilnehmern als gültig erachtet und es kann eine entsprechende Authentisierung erfolgen, in deren Rahmen ein Sitzungsschlüssel SK zwischen den beiden Teilnehmern A und B eingerichtet wird. Mit Hilfe dieses Schlüssels kann nachfolgend eine vertrauensgeschützte Kommunikation stattfinden.

In der Variante der Fig. 3 erfolgt die Überprüfung der entsprechenden Merkmale AV bzw. AV' im Rahmen des Protokollablaufs. Wie bereits oben erwähnt, kann diese Überprüfung auch im Rahmen einer eigenständigen Authentisierung außerhalb des Protokolls zwischen den authentisierenden Kommunikationspartnern ablaufen, z.B. mittels des HTTP-Protokolls nach einem abgeschlossenen SSL/TLS-Verbindungsaufbau über die aufgebaute SSL/TLS-Verbindung.

Die im Vorangegangenen beschriebenen Ausführungsformen des erfindungsgemäßen Verfahrens weisen eine Reihe von Vorteilen auf. Insbesondere können Zertifikate ausgestellt werden, die nur für genau einen festgelegten Verwendungszweck nutzbar sind, z.B. für die geschützte Kommunikation mit einem Bootstrapping-Server oder für die geschützte Kommunikation nur mit einem bestimmten VPN-Server. Mit dem erfindungsgemäßen Authentisierungsverfahren ist der mögliche Schaden eines kompromittierten Zertifikats bzw. eines durch das Zertifikat bestätigten Schlüssels kontrollierbar, da das Zertifikat nicht universell einsetzbar ist, sondern nur für einen ganz genau eingeschränkten Anwendungszweck. Gegebenenfalls können auch freie Zertifikate verwendet werden, welche preiswert mit geringen administrativen Prüfungen ausgestellt werden, und welche z.B. nur zwischen Herstellergeräten eines Herstellers funktionieren. Dies kann dadurch erreicht werden, dass in dem entsprechenden Attribut des Zertifikats als Authentikator nur Geräte eines bestimmten Herstellers angegeben werden.

## Patentansprüche

1. Verfahren zur Zertifikats-basierten Authentisierung, bei der sich ein erster Teilnehmers (A) gegenüber einem zweiten Teilnehmer (B) mit einem, dem ersten Teilnehmer (A) zugeordneten Zertifikat authentisiert, wobei:
- das Zertifikat (C, C') ein oder mehrere Merkmale (AV, AV') spezifiziert, die von dem zweiten Teilnehmer (B) zu erfüllen sind;
- im Rahmen der Authentisierung anhand des Zertifikats (C, C') überprüft wird, ob der zweite Teilnehmer (B) das oder die Merkmale (AV) erfüllt, wobei ein für eine erfolgreiche Authentisierung erforderliches Kriterium darin besteht, dass der zweite Teilnehmer (B) das oder die Merkmale (AV, AV') erfüllt;
- die Überprüfung, ob der zweite Teilnehmer (B) das oder die Merkmale (AV, AV') erfüllt, durch den ersten Teilnehmer (A) durchgeführt wird.

2. Verfahren nach Anspruch 1, bei dem das oder die Merkmale (AV, AV') durch ein oder mehrere Attribute und/oder einen oder mehrere Verweise auf Attribute in dem Zertifikat (C, C') spezifiziert werden.

3. Verfahren nach Anspruch 1 oder 2, bei dem der erste Teilnehmer (A) eine Information betreffend Eigenschaften des zweiten Teilnehmers (B) von dem zweiten Teilnehmer (B) empfängt oder bei einer dritten Stelle abruft, wobei der erste Teilnehmer (A) anschließend anhand der Information bestimmt, ob der zweite Teilnehmer (B) das oder die im Zertifikat (C, C') spezifizierten Merkmale erfüllt.

4. Verfahren nach einem der vorhergehenden Ansprüche, bei dem das oder die Merkmale, die von dem zweiten Teilnehmer (B) zu erfüllen sind, eines oder mehrere der folgenden Merkmale umfassen:
- eine Identität oder einen Identitätsbereich für den zweiten Teilnehmer (B);
- einen Gerätetyp des zweiten Teilnehmers (B);
- einen von dem zweiten Teilnehmer (B) bereitgestellten Dienst;
- ein von dem zweiten Teilnehmer (B) bereitgestelltes Verfahren.

5. Verfahren nach Anspruch 4, bei dem die Identität oder der Identitätsbereich zumindest eine der folgenden Größen umfasst:
- eine Adresse, insbesondere eine IP-Adresse oder MAC-Adresse;
- einen Adressbereich, insbesondere einen IP-Adressbereich oder MAC-Adressbereich;
- einen Namen, insbesondere einen DNS-Namen;
- einen Namensbereich, insbesondere einen DNS-Namensbereich;
- eine Portnummer oder einen Portnummern-Bereich, insbesondere basierend auf dem TCP- und/oder UDP-Protokoll;
- einen URL-Bezeichner oder einen URL-Bezeichnerbereich.

6. Verfahren nach Anspruch 4 oder 5, bei dem der von dem zweiten Teilnehmer (B) bereitgestellte Dienst einen Web-Service umfasst und/oder das von dem zweiten Teilnehmer (B) bereitgestellte Verfahren eine Methode eines Web-Services umfasst.

7. Verfahren nach einem der vorhergehenden Ansprüche, bei dem im Rahmen der Authentisierung des ersten Teilnehmers (A) gegenüber dem zweiten Teilnehmer (B) eine Verifikation des Zertifikats (C, C') des ersten Teilnehmers (A) durch den zweiten Teilnehmer (B) erfolgt.

8. Verfahren nach einem der vorhergehenden Ansprüche, bei dem mit einem im Zertifikat (C, C') enthaltenen öffentlichen Schlüssel des ersten Teilnehmers (A) sowie dem diesem öffentlichen Schlüssel zugeordneten privaten Schlüssel eine kryptographisch gesicherte Verbindung zwischen dem ersten und zweiten Teilnehmer (R1, R2) aufgebaut wird, insbesondere basierend auf dem SSL/TLS-Protokoll und/oder dem IKE/IPsec-Protokoll und/oder dem IKEv2/IPsec-Protokoll.

9. Verfahren nach einem der vorhergehenden Ansprüche, bei dem das Zertifikat (C, C') ein erweitertes X.509-Zertifikat ist, welches zusätzlich das oder die Merkmale (AV, AV') spezifiziert, die von dem zweiten Teilnehmer zu erfüllen sind.

10. Verfahren nach einem der vorhergehenden Ansprüche, bei dem das Verfahren zur Authentisierung des ersten Teilnehmers (A) beim zweiten Teilnehmer (B) und des zweiten Teilnehmers (B) beim ersten Teilnehmer (A) genutzt wird.

11. Verfahren nach einem der vorhergehenden Ansprüche, bei dem der erste und/oder zweite Teilnehmer (A, B) Komponenten einer Automatisierungsanlage darstellen.

12. Kommunikationsnetz mit einem ersten und einem zweiten Teilnehmer (A, B), wobei im Betrieb des Kommunikationsnetzes eine Zertifikats-basierte Authentisierung durchführbar ist, bei der sich der erste Teilnehmer (A) gegenüber dem zweiten Teilnehmer (B) mit Hilfe eines, dem ersten Teilnehmer (A) zugeordneten digitalen Zertifikats (C, C') authentisiert, wobei
- das Zertifikat (C, C') ein oder mehrere Merkmale (AV, AV') spezifiziert, die von dem zweiten Teilnehmer (B) zu erfüllen sind;
- im Rahmen der Authentisierung anhand des Zertifikats (C, C') überprüft wird, ob der zweite Teilnehmer (B) das oder die Merkmale (AV) erfüllt, wobei ein für eine erfolgreiche Authentisierung erforderliches Kriterium darin besteht, dass der zweite Teilnehmer (B) das oder die Merkmale erfüllt;
- die Überprüfung, ob der zweite Teilnehmer (B) das oder die Merkmale (AV, AV') erfüllt, durch den ersten Teilnehmer (A) durchgeführt wird.

13. Kommunikationsnetz nach Anspruch 12, welches derart ausgestaltet ist, dass in dem Kommunikationsnetz ein Verfahren nach einem der Ansprüche 2 bis 11 durchführbar ist.

## Claims

1. Method for certificate-based authentication, which involves a first subscriber (A) authenticating itself to a second subscriber (B) using a certificate associated with the first subscriber (A), wherein:
- the certificate (C, C') specifies one or more features (AV, AV') needing to be implemented by the second subscriber (B);
- an authentication on the basis of the certificate (C, C') involves a check being performed to determine whether the second subscriber (B) implements the feature(s) (AV), wherein a criterion required for successful authentication is that the second subscriber (B) implements the feature(s) (AV, AV');
- the check to determine whether the second subscriber (B) implements the feature (s) (AV, AV') is performed by the first subscriber (A).

2. Method according to Claim 1, in which the feature(s) (AV, AV') is/are specified by one or more attributes and/or one or more references to attributes in the certificate (C, C').

3. Method according to Claim 1 or 2, in which the first subscriber (A) receives a piece of information relating to properties of the second subscriber (B) from the second subscriber (B) or retrieves said information from a third location, wherein the first subscriber (A) subsequently uses the information to determine whether the second subscriber (B) implements the feature(s) specified in the certificate (C, C').

4. Method according to one of the preceding claims, in which the feature(s) needing to be implemented by the second subscriber (B) comprise (s) one or more of the following features:
- an identity or an identity range for the second subscriber (B);
- a device type of the second subscriber (B);
- a service provided by the second subscriber (B);
- a method provided by the second subscriber (B).

5. Method according to Claim 4, in which the identity or the identity range comprises at least one of the following variables:
- an address, particularly an IP address or MAC address;
- an address range, particularly an IP address range or MAC address range;
- a name, particularly a DNS name;
- a name range, particularly a DNS name range;
- a port number or a port number range, particularly based on the TCP and/or UDP protocol;
- a URL descriptor or a URL descriptor range.

6. Method according to Claim 4 or 5, in which the service provided by the second subscriber (B) comprises a web service and/or the method provided by the second subscriber (B) comprises a method of a web service.

7. Method according to one of the preceding claims, in which the authentication of the first subscriber (A) to the second subscriber (B) involves verification of the certificate (C, C') of the first subscriber (A) being effected by the second subscriber (B).

8. Method according to one of the preceding claims, in which a public key of the first subscriber (A), which is contained in the certificate (C, C'), and the private key associated with this public key are used to set up a cryptographically secure connection between the first and second subscribers (R1, R2), particularly based on the SSL/TLS protocol and/or the IKE/IPsec protocol and/or the IKEv2/IPsec protocol.

9. Method according to one of the preceding claims, in which the certificate (C, C') is an extended X.509 certificate that additionally specifies the feature(s) (AV, AV') needing to be implemented by the second subscriber.

10. Method according to one of the preceding claims, in which the method is used to authenticate the first subscriber (A) with the second subscriber (B) and to authenticate the second subscriber (B) with the first subscriber (A).

11. Method according to one of the preceding claims, in which the first and/or second subscriber(s) (A, B) is/are components of an automation installation.

12. Communication network having a first and a second subscriber (A, B), wherein during operation of the communication network it is possible for certificate-based authentication to be performed, which involves the first subscriber (A) authenticating itself to the second subscriber (B) using a digital certificate (C, C') associated with the first subscriber (A), wherein
- the certificate (C, C') specifies one or more features (AV, AV') needing to be implemented by the second subscriber (B);
- an authentication on the basis of the certificate (C, C') involves a check being performed to determine whether the second subscriber (B) implements the feature(s) (AV), wherein a criterion required for successful authentication is that the second subscriber (B) implements the feature(s);
- the check to determine whether the second subscriber (B) implements the feature (s) (AV, AV') is performed by the first subscriber (A).

13. Communication network according to Claim 12, which is configured such that a method according to one of Claims 2 to 11 can be performed in the communication network.

## Revendications

1. Procédé d'authentification sur la base de certificats, dans lequel un premier abonné (A) s'authentifie vis-à-vis d'un deuxième abonné (B) au moyen d'un certificat associé au premier abonné (A),
- le certificat (C, C') spécifiant une ou plusieurs caractéristiques (AV, AV') que le deuxième abonné (B) doit satisfaire ;
- étant entendu qu'il est vérifié, dans le cadre de l'authentification à l'aide du certificat (C, C'), si le deuxième abonné (B) satisfait la ou les caractéristiques (AV), un critère requis pour une authentification réussie consistant dans le fait que le deuxième abonné (B) satisfait la ou les caractéristiques (AV, AV') ;
- la vérification si le deuxième abonné (B) satisfait la ou les caractéristiques (AV, AV') étant effectuée par le premier abonné (A).

2. Procédé selon la revendication 1, dans lequel la ou les caractéristiques (AV, AV') sont spécifiées par un ou plusieurs attributs et/ou un ou plusieurs renvois à des attributs dans le certificat (C, C').

3. Procédé selon la revendication 1 ou 2, dans lequel le premier abonné (A) reçoit du deuxième abonné (B) une information concernant des caractéristiques du deuxième abonné (B) ou la demande à une troisième instance, le premier abonné (A) déterminant ensuite, à l'aide de l'information, si le deuxième abonné (B) satisfait la ou les caractéristiques spécifiées dans le certificat (C, C').

4. Procédé selon l'une des revendications précédentes, dans lequel la ou les caractéristiques auxquelles doit satisfaire le deuxième abonné (B) comprennent une ou plusieurs des caractéristiques suivantes :
- une identité ou un domaine d'identité pour le deuxième abonné (B) ;
- un type d'appareil du deuxième abonné (B) ;
- un service fourni par le deuxième abonné (B) ;
- un procédé fourni par le deuxième abonné (B).

5. Procédé selon la revendication 4, dans lequel l'identité ou le domaine d'identité comprend au moins une des grandeurs suivantes :
- une adresse, en particulier une adresse IP ou une adresse MAC ;
- un domaine d'adresses, en particulier un domaine d'adresses IP ou un domaine d'adresses MAC ;
- un nom, en particulier un nom DNS ;
- un domaine de noms, en particulier un domaine de noms DNS ;
- un numéro de port ou un domaine de numéros de port, en particulier sur la base du protocole TCP et/ou UDP ;
- un identificateur URL ou un domaine d'identificateurs URL.

6. Procédé selon la revendication 4 ou 5, dans lequel le service fourni par le deuxième abonné (B) comprend un service Web et/ou en ce que le procédé fourni par le deuxième abonné (B) comprend une méthode d'un service Web.

7. Procédé selon l'une des revendications précédentes, dans lequel a lieu, dans le cadre de l'authentification du premier abonné (A) vis-à-vis du deuxième abonné (B), une vérification du certificat (C, C') du premier abonné (A) par le deuxième abonné (B).

8. Procédé selon l'une des revendications précédentes, dans lequel est établie, au moyen d'une clé publique du premier abonné (A) contenue dans le certificat (C, C') ainsi que d'une clé privée associée à cette clé publique, une liaison sécurisée cryptographiquement entre le premier et le deuxième abonné (R1, R2), en particulier sur la base du protocole SSL/TLS et/ou du protocole IKE/IPsec et/ou du protocole IKEv2/IPsec.

9. Procédé selon l'une des revendications précédentes, dans lequel le certificat (C, C') est un certificat X.509 élargi qui spécifie en outre la ou les caractéristiques (AV, AV') que le deuxième abonné doit satisfaire.

10. Procédé selon l'une des revendications précédentes, dans lequel le procédé est utilisé pour l'authentification du premier abonné (A) auprès du deuxième abonné (B) et du deuxième abonné (B) auprès du premier abonné (A).

11. Procédé selon l'une des revendications précédentes, dans lequel le premier et/ou le deuxième abonné (A, B) sont des composants d'une installation d'automatisation.

12. Réseau de communication comportant un premier et un deuxième abonné (A, B), une authentification sur la base de certificats, dans laquelle le premier abonné (A) s'authentifie vis-à-vis du deuxième abonné (B) à l'aide d'un certificat numérique (C, C') associé au premier abonné (A), peut être effectuée pendant le fonctionnement du réseau de communication,
- le certificat (C, C') spécifie une ou plusieurs caractéristiques (AV, AV') que le deuxième abonné (B) doit satisfaire ;
- étant entendu qu'il est vérifié, dans le cadre de l'authentification à l'aide du certificat (C, C'), si le deuxième abonné (B) satisfait la ou les caractéristiques (AV), un critère requis pour une authentification réussie consistant dans le fait que le deuxième abonné (B) satisfait la ou les caractéristiques ;
- la vérification si le deuxième abonné (B) satisfait la ou les caractéristiques (AV, AV') étant effectuée par le premier abonné (A).

13. Réseau de communication selon la revendication 12, lequel est conçu de telle sorte qu'un procédé selon l'une des revendications 2 à 11 peut être exécuté dans le réseau de communication.
